# EUROPEAN PATENT SPECIFICATION

(11) **EP 3 421 250 B1**
(45) Date of publication and mention of the grant of the patent: **29.11.2023**
(21) Application number: 16865823.5
(22) Date of filing: 08.11.2016
(51) Int. Cl.: B41J 2/515, B41J 3/407, B41J 2/155, B41J 2/04, B41J 2/21, B41J 3/28, B41J 25/00, C03C 17/00, G06K 15/02, B41J 19/14

(54) **MACHINE AND METHOD FOR SINGLE-PASS DIGITAL PRINTING ON GLASS**
MASCHINE UND VERFAHREN ZUM DIGITALEN DRUCKEN IN EINEM DURCHGANG AUF GLAS
MACHINE ET PROCÉDÉ D'IMPRESSION NUMÉRIQUE SUR DU VERRE EN UNE PASSE

(30) Priority: 17.11.2015 ES 201531665
(43) Date of publication of application: 02.01.2019
(73) Proprietor: Tecglass, S.L., 36500 Lalin (ES)
(72) Inventor: FERNANDEZ VAZQUEZ, Juan Javier, Lalin, Pontevedra (ES); RAMOS QUIROGA, Manuel, Ponferrada, Leon (ES)
(74) Representative: López Camba, Emilia
(86) International application number: PCT/ES2016/070794
(87) International publication number: WO 2017/085341

(56) References cited:
- EP-A1- 2 476 558
- EP-A1- 2 626 209
- EP-A2- 2 039 524
- EP-A2- 2 436 527
- DE-A1-102006 038 750
- ES-A2- 2 404 729
- GB-A- 2 464 758
- JP-A- 2005 185 978
- US-A1- 2003 043 246
- US-A1- 2009 262 155
- US-A1- 2012 075 375
- US-A1- 2014 168 303
- US-A1- 2014 204 426
- US-A1- 2015 138 266

## Description

### OBJECT OF THE INVENTION

The present invention relates to a method and a machine for single-pass digital printing on glass, which employs digital printing heads, and which may also act as a multi-pass for the correction of printing defects detected after the printing.

### BACKGROUND OF THE INVENTION

In the state of the art of machines for digital printing on glass are frequent multi-pass machines comprising a print carriage that travels along a bridge located on the passage "X" of a glass sheet that is placed and moved on a table (see patent ES2.337.829T3), and said bridge (and therefore the displacement "Y" of the printing carriage) being transverse or perpendicular to passage "X" of the glass to be printed as described in patent ES2.396.532. Technology in which the bridge moves in the "X" direction (with traversal displacement "Y" of the printing carriage) while the glass is held in a fixed position is also known. In these cases, there is a printing carriage that has to print the glass in several passes with said carriage moving across the width of the bridge that supports it.

These machines are commonly called multi-pass, or multipass, since in general they print in the following way: the glass is placed in the printing position and the bridge moves in the "X" direction towards the glass (or glass moves "X" on the table until the part to be printed is under the bridge), the print carriage begins to move across the "Y" width of the bridge while printing on the glass (making a pass over the glass), then the glass, or bridge, moves in the "X" direction the width of the printing head and the carriage returns to make a printing in the "Y" direction and so on until finishing the printing on the glass to be printed. There are variants of multi-pass printing as described in patent EP2631077.

In short, the multi-pass process is a printing method by which the head performs several passes depending on the resolution to be achieved to perform the printing on the glass. The machines that execute this multi-pass method usually consist of a printing carriage with several printing heads, with dimensions less than the maximum format to be printed on the glass sheet and, therefore, the only way to cover the maximum format is making multiple passes on the glass sheet or matter to be printed. This number of passes, as already indicated, will be greater or lesser depending on the resolution that is intended to be achieved.

Multi-pass digital printing machines have economic advantages by using small printing carriages with few printing heads. Also, by executing multiple passes, they may be able to hide a printing defect produced by a head, since the failure of the first pass may be covered by a second pass (see patent document US2014/0204426).

In the state of the art are known the following documents
- GB 2 464 758 A which discloses a substrate handling device for a printer includes a printhead arrangement 3 for printing onto a substrate in a print region. The substrate includes a web and the device includes a web support for supporting the web in the print region and a web transport device adapted to move the web forwards and backwards in the printing region. It further discloses single-pass printing in combination with printing onto a rigid panel placed on the web or substrate.
- US 2015/138266A1 which discloses an inkjet printing method and system includes an arrangement that is adapted to repair a printed image using a combination of in-line imaging and feedback control of an inkjet printhead or printing with a redundant inkjet printhead.

In the case of multi-pass printing machines, since they have to carry out several printing passes of the printing carriage, the printing time is prolonged proportionally to the number of passes to be executed.

The printing machines such as the printing machine according to the invention which execute single-pass digital printing processes in which the glass to be printed is moved under printing heads usually have a series of drawbacks: In the event that the matter has already passed through the machine and some defect in the printing has occurred, it is no longer possible to return it exactly through an identical path with the required precision to be able to correct the defect with a localized print on the identified defect. Therefore, these single-pass machines usually leave any very evident printing defect. For example, in the industrial sector of ceramics, where the matter to be printed is opaque, the matter to be printed is usually moved, and hot printing occurs (over 40 degrees) and for limited dimensions (maximum 1.5 x 1.5 meters). In order to single-pass print on glass is necessary a great precision in the positioning and systems that move the matter, which is highly complex.

### DESCRIPTION OF THE INVENTION

The machine and method object of the present invention overcomes the disadvantages of the multi-pass and single-pass printing machines described above

The single-pass machine object of the present invention allows making several passes to correct any defect detected after a single-pass or, acccording to an alternative embodiment not according to the invention, ef to print any design that due to its complexity can not be made in single-pass. It acts as a mixed printing machine. When acting as a single-pass (or singlepass), the glass sheet to be printed is placed in the printing position by an automatic positioning. A printing bridge makes a pass (in the "X" direction) above the glass sheet, which is placed statically, printing all the glass upon completion of the pass. To do this, the bridge incorporates printheads along its width that cover the width of glass, or glass sheet, to be printed.

The advantage of a single-pass machine and method is its high productivity, since it can print a glass sheet several times faster than the classic multi-pass machines. An advantage of the singlepass machine and method according to the invention is that it can print more precisely and accurately than the current single-pass printing machines, since the glass is positioned and static in an exactly known position.

When a defect has occurred during single-pass printing in the machine according to the present invention, since the glass is static and held in the printing position, said defects can be detected by graphic assistance means connected to a central processing and control unit of the printing machine that may instruct the bridge to perform additional high precision passes on the glass to correct the detected defects. These graphic assistance means can be of optical type installed in the printing machine (for example in the printing bridge) that analyze the printed image and detect defects.

Therefore, once the single-pass printing is performed, or even a singlepass for rectification of defects, the graphic assistance means performs a pass (for example a scanner located on the bridge that will give a scanning pass) on the printed glass, and if it does not detect defects (the scanner can take highprecision photographs of the printed glass) with respect to the reference or pattern to be printed, it activates the means for ejecting the glass from the machine. This operation may be semi-automated, so that the expulsion of the printed glass must wait for an operator confirmation, in case it is decided to opt for a manual inspection. That is, it may be an operator who, upon detecting a defect visually, activates a new printing pass before authorizing the evacuation or ejection of the glass from the machine, thus correcting the defect.

Therefore, the printing machine according to the present invention is a mixed printing machine that can work in single-pass, or multi-pass mode, if it is necessary to correct a detected defect. With this machine, a series of advantages are achieved: Significant reduction of printing times of traditional multi-pass machines, providing a more productive alternative.
Flexibilization of high volume production systems. Today, large volume manufacturers often use printing screens that limit production flexibility due to the high costs of screen replacement. Using the machine according to the present invention, each glass sheet may be printed with a different design without affecting the cycle time, by means of the selection in the graphic assistant associated with the machine. In such graphical assistant the design to be printed may be chosen every time a new glass sheet enters the machine, even loading on-line from production servers the designs provided by the customer.

For example, the industry of manufacturers of serial automotive glass or glass for white goods (oven doors, kitchen countertops, etc.) may be passed, with this machine, to digital printing, gaining in flexibility.

More specifically, the single-pass digital printing machine on glass according to the present invention has: a support structure with automatic positioning means for positioning and securing a glass sheet during printing and, according to a modification not covered by the claims, with ejecting means of the glass sheet and, according to the invention, also with glass transport means when the printing is not being produced, and also a printing bridge movable in the "X" direction located on said support structures, and digital printing means of the glass, or glass sheet, supported by said bridge.

The digital printing means consist of parallel bars with printing heads, with each bar preferably occupying the entire effective width of the bridge (i.e., the part of the bridge that remains over the areas of the support structure in which a glass sheet may be placed), and each printing bar having all its heads connected to an ink supply of the same color. Therefore, if successive printing bars are installed, they are installed in parallel. The printing heads of the printing means perform a controlled printing, by a central processing and control unit of the machine, continuously on the glass when said bridge moves ("X") on the static glass secured by the means for fixing the glass during printing.

The digital printing machine according to the present invention incorporates graphics assistance means, connected to the central processing and control unit, for automatic detection and capture of the position data of the printing defects (X", Y") on the glass sheet, and sending said data to a central data processing and control unit. These graphic assistance means can be, for example, optical scanners supported by the bridge. The machine also incorporates may artificial vision means for automatic capture and sending of the data of the outer perimeter (X, f(X)) of the glass sheet, said data being sent to the central data processing and control unit.

The central data processing and control unit of the machine consists of at least one module with the position data of the pattern (X',Y') or figure to be printed and its colors (C'(X',Y')), a module with the position data of the printing defects (X", Y") and their corresponding colors (C"(X",Y")) (which correspond to the pattern colors (C"(X",Y") = (C'(X',Y'))) on the glass sheet (1), and a module for receiving the data from said artificial vision means for automatic capture of the data from the outer perimeter of the glass sheet, a software for processing the data arriving at the central data processing and control unit, and determining the position information of the printing heads on the printing coordinates (X',Y'), and a module for recognizing the perimeter of the glass sheet to avoid any printing outside the contours of the glass sheet, and a module for sending the printing signals to the heads of the printing means as a function of the pattern data ((X',Y'), (X",Y")) and colors (C',C") to be printed on the glass sheet.

The digital printing method according to the present invention, using the machine acccording to the present invention, has a step of feeding, positioning and securing the glass in the printing plane, a step of complete and continuous movement of the printing bridge over the secured glass, with simultaneous printing of the printing heads which print a pre-selected pattern for each glass to be printed, printing only the heads of the printing bars that are placed on the glass (1) according to the color (C'(X',Y')) and position (X', Y ') data of the figure to be printed supplied by the central processing unit. The information that the printing heads have to print can also be provided by the file itself to be printed that can be sent by the client that makes the order.

In addition, the method may be executed with a step of detecting the position data of printing defects (X", Y") on the glass sheet (for example, by scanning performed by a scanner located on the printing bridge) at the end of each printing pass, followed by at least one step of complete and continuous displacement of the printing bridge on the secured glass, with simultaneous and selective printing of the printing heads that print on the defects (X", Y") detected in the glass and according to the corresponding color data (C"(X", Y")).

Also, the machine according to the present invention may incorporate, together with the printing heads, devices for drying the ink printed on the glass surface with, for example, laser and/or infrared lamp technology. Said drying devices are controlled by the central processing and control unit, which is configured by associating the printing signal of each head with a signal for activating the drying means associated with said head.

The machine according to the present invention may employ a series of common components in machines such as motors, electronics, electricity and pneumatics known in the state of the art. By using commercial ink heads that also use commercial printing inks (for example, the printing head may be of the type of DROP-ON-DEMAND technology), it lowers the maintenance and operation costs of the machine, providing great flexibility in the supply of key components and cost savings.

If the printing heads and the drying lasers and/or infrared lamps are put together, the laser and/or infrared lamp is covered and dried throughout the width of the printing with each pass of the bridge over the glass surface. Thus, the heads deposit the ink and immediately, and simultaneously, the laser beam and/or the infrared lamp dry the deposited ink.

The method according to the invention, therefore, also allows a single step of (single-pass) digital printing with simultaneous drying of the print by the simultaneous laser and/or infrared lamp fixed to each printing head, of defect correction by means of multi-passes of the bridge and, according to an embodiment not according to the invention, of printing of very complex designs in multi-pass, and, according to a further preferred embodiment of the invention, also a step of final tempering of the glass with vitrification of the applied ink.

### BRIEF DESCRIPTION OF THE DRAWINGS

The following figures are included in order to facilitate the understanding of the invention:
Figure 1: perspective view of the printing machine according to the present invention.
Figure 2: bottom plan view of the bridge with the printing and scanning means.

### PREFERRED EMBODIMENT OF THE INVENTION

Next, a preferred embodiment of the machine according to the present invention is detailed.

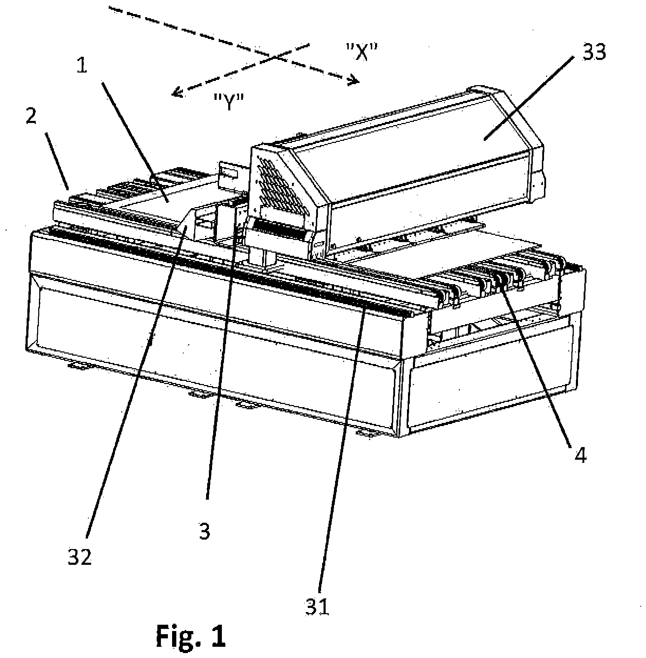

Figure 1 shows a single-pass digital printing machine for printing on glass with a support structure (2) having automatic positioning means for the positioning and securing (not shown) of a glass sheet (1) and with transport means, (4) by belts, of the glass sheet when printing is not occurring. The printing bridge (3) moves along the guides (31) supported on the sides of the support structure (2) in the "X" direction (longitudinal axis of the machine) and supports digital printing means (33) and a scanner (32) for detecting the defect positions (X", Y") on the "X" and "Y" axes of the machine

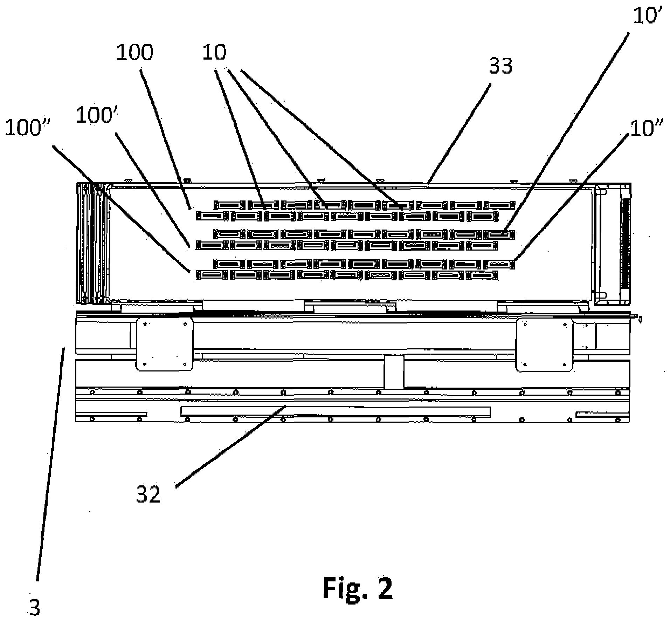

As seen in Figure 2, the bridge (3) supports digital printing means (33) of the glass sheet (1) with six printing bars (for example references 100, 100' and 100" in Figure 2) parallel in their lower part, which occupy the entire effective width (between the lateral guides (31)) of the bridge (3). Each bar has a succession of printing heads (for example, references 10, 10' and 10" in figure 2) that incorporate DROP-ON-DEMAND technology.

## Claims

1. Machine for single-pass digital printing on glass sheet (1) comprising:
a. a support structure (2) comprising means configured for the positioning and automatic securing of a glass sheet (1) during printing, and means configured for the transport (4) of said glass sheet when printing is not occurring,
b. a printing bridge (3) configured to move along the longitudinal "X" axis of the support structure (2) and located on said supporting structure wherein the printing bridge makes a pass in the "X" direction above the glass sheet which is placed statically, printing all the glass upon completion of the pass, and
c. digital printing means (33) of the glass sheet are supported by said bridge (3) configured to perform the printing on the glass sheet (1) when said bridge (3) moves on the glass sheet secured to said structure support (2); said printing means comprising at least one printing bar (100), said printing bar comprising successive printing heads (10), and said successive printing heads (10) of each printing bar (100) being fed by ink of the same color,
wherein the printing heads of the printing means perform a controlled printing, by a central processing and control unit of the machine, continuously on the glass when said bridge moves ("X") on the static glass secured by the means for fixing the glass during printing,
wherein the printing machine is configured to continuously print on the glass sheet (1) during the linear and continuous movement of the bridge (3), and in that it further comprises:
a. Graphic assistance means (33) configured to automatically detect and capture the data of printing defect position (X", Y") on the glass sheet (1) and configured to send said data, and
b. A central data processing and control unit comprising:
i. A module configured to receive and store the position data of the pattern (X', Y') and its colors (C'(X', Y')) to be printed on the glass sheet (1),
ii. A module configured to receive and store the position data of the printing defects (X", Y") and their corresponding colors (C"(X", Y")) on the glass sheet (1),
iii. A module configured to send printing signals to the heads (10,10', 10") of the printing means (33) as a function of the position data (X', Y') of the pattern, of defect data (X", Y") and color data (C'(X',Y'), C"(X",Y")) to be printed on the glass sheet (1), and
iv. A software configured to process said data of said modules, it further comprises artificial vision means configured for automatically capturing the data of the outer perimeter (X, f(X)) of the glass sheet (1) and configured for sending said data (X, f(X)) to the central processing and control unit, and wherein said central processing and control unit further comprises a module configured to receive said data from the outer perimeter of the glass sheet, being used said artificial vision means for recognizing the perimeter of the glass sheet to avoid any printing outside the contours of the glass sheet.

2. Digital printing machine according to claim 1, wherein said digital printing means (33) covers the entire width of said glass.

3. Digital printing machine acccording to any preceding claim, wherein said digital printing means (33) further comprises devices for emitting radiation for drying the ink.

4. Digital printing machine acccording to claim 3, wherein said devices for emitting drying radiation are of laser technology or infrared lamps.

5. Digital printing machine acccording to any preceding claim, wherein said printing heads (10, 10') are of the type of DROP-ON-DEMAND technology.

6. Digital printing machine acccording to claims 3 and 5 wherein said module configured to send printing signals is also configured to send activation signals of said devices for emitting radiation for drying the ink.

## Patentansprüche

1. - Maschine für Single-Pass-Digitaldruck auf Glasscheiben (1), umfassend:
a. eine Trägerstruktur (2), die eine Vorrichtung umfasst, die für die Positionierung und die automatische Befestigung einer Glasscheibe (1) während des Druckvorgangs konfiguriert ist, sowie eine Vorrichtung, die für den Transport (4) der Glasscheibe konfiguriert ist, wenn kein Druckvorgang stattfindet,
b. eine Druckbrücke (3), die so konfiguriert ist, dass sie sich entlang der "X"-Längsachse der Trägerstruktur (2) bewegt, und die auf der Trägerstruktur angeordnet ist, wobei die Druckbrücke einen Durchgang in "X"-Richtung über der statisch angeordneten Glasscheibe durchführt und das gesamte Glas während des Durchgangs bedruckt,
und
c. Digitaldruckvorrichtungen (33) der Glasscheibe, die von der Brücke (3) getragen werden und so konfiguriert sind, dass sie den Druck auf der Glasscheibe (1) ausführen, wenn sich die Brücke (3) auf der an der Trägerstruktur (2) befestigten Glasscheibe bewegt; wobei die Druckvorrichtung mindestens eine Druckleiste (100) umfasst und die Druckleiste aufeinanderfolgende Druckköpfe (10) umfasst und die aufeinanderfolgenden Druckköpfe (10) jeder Druckleiste (100) mit Tinte der gleichen Farbe gespeist werden, wobei
die Druckköpfe der Druckvorrichtung kontinuierlich einen von einer zentralen Verarbeitungs- und Steuereinheit der Maschine gesteuerten Druck auf dem Glas ausführen, wenn sich die Brücke ("X") auf dem statischen Glas bewegt, das von der Vorrichtung zur Fixierung des Glases während des Drucks gehalten wird, wobei
die Druckmaschine so konfiguriert ist, dass sie während der linearen und kontinuierlichen Bewegung der Brücke (3) kontinuierlich auf die Glasscheibe (1) druckt, und dadurch, dass sie außerdem Folgendes umfasst:
a. Graphisches Hilfsmittel (33), das so konfiguriert ist, dass es die Daten einer Druckfehlerposition (X", Y") auf der Glasscheibe (1) automatisch erkennt und erfasst und das so konfiguriert ist, dass es diese Daten senden kann, und
b. eine zentrale Datenverarbeitungs- und Steuereinheit, die Folgendes umfasst:
i. Ein Modul, das so konfiguriert ist, dass es die Positionsdaten des Musters (X', Y') und seiner Farben (C'(X', Y')), die auf die Glasscheibe (1) gedruckt werden sollen, empfängt und speichert
ii. Ein Modul, das so konfiguriert ist, dass es die Positionsdaten der Druckfehler (X", Y") und ihrer entsprechenden Farben (C"(X", Y")) auf der Glasscheibe (1) empfängt und speichert,
iii. Ein Modul, das so konfiguriert ist, dass es Drucksignale an die Köpfe (10, 10', 10") der Druckvorrichtung (33) in Abhängigkeit von den Positionsdaten (X', Y') des Musters, von Defektdaten (X", Y") und Farbdaten (C'(X', Y'), C"(X", Y")), die auf die Glasscheibe (1) gedruckt werden sollen, sendet, und
iv. Eine Software, die so konfiguriert ist, dass sie die Daten der genannten Module verarbeitet,
die ferner eine Vorrichtung zum künstlichen Sehen umfasst, die so konfiguriert ist, dass sie automatisch die Daten des Außenumfangs (X, f(X)) der Glasscheibe (1) erfasst, und so konfiguriert ist, dass sie die Daten (X, f(X)) an die zentrale Verarbeitungs- und Steuereinheit sendet, und wobei die zentrale Verarbeitungs- und Steuereinheit ferner ein Modul umfasst, das so konfiguriert ist, dass es die Daten vom Außenumfang der Glasscheibe empfängt, wobei die Einrichtung zum künstlichen Sehen dazu verwendet wird, den Umfang der Glasscheibe zu erkennen, um jeden Druck außerhalb der Konturen der Glasscheibe zu verhindern.

2. Digitaldruckmaschine nach Anspruch 1, wobei die Digitaldruckvorrichtung (33) die gesamte Breite des Glases abdeckt.

3. Digitaldruckmaschine nach einem der vorhergehenden Ansprüche, wobei die Digitaldruckvorrichtung (33) ferner Vorrichtungen zum Emittieren von Strahlung zum Trocknen der Tinte umfasst.

4. Digitaldruckmaschine nach Anspruch 3, wobei die Vorrichtungen zum Emittieren von Trocknungsstrahlung Lasertechnik oder Infrarotlampen sind.

5. Digitaldruckmaschine nach einem der vorhergehenden Ansprüche, wobei die Druckköpfe (10, 10') vom Typ der DROP-ON-DEMAND-Technologie sind.

6. Digitaldruckmaschine nach Anspruch 3 und 5, wobei das Modul, das so konfiguriert ist, dass es Drucksignale sendet, auch konfiguriert ist, Aktivierungssignale der Vorrichtungen zum Emittieren von Strahlung zum Trocknen der Tinte zu senden.

## Revendications

1. Machine pour l'impression numérique en un seul passage sur une feuille de verre (1) comprenant :
a. une structure de support (2) comprenant des moyens configurés pour le positionnement et la fixation automatique d'une feuille de verre (1) pendant l'impression, et des moyens configurés pour le transport (4) de ladite feuille de verre lorsque l'impression n'est pas en cours,
b. un pont d'impression (3) configuré pour se déplacer le long de l'axe longitudinal « X » de la structure de support (2) et situé sur ladite structure de support, dans lequel le pont d'impression effectue un passage dans la direction « X » au-dessus de la feuille de verre placée de manière statique, en imprimant tout le verre à la fin du passage, et
c. les moyens d'impression numérique (33) de la feuille de verre sont supportés par ledit pont (3) configuré pour effectuer l'impression sur la feuille de verre (1) lorsque ledit pont (3) se déplace sur la feuille de verre fixée sur ledit support de structure (2) ; lesdits moyens d'impression comprennent au moins une barre d'impression (100), ladite barre d'impression comprenant des têtes d'impression successives (10), et lesdites têtes d'impression successives (10) de chaque barre d'impression (100) étant alimentées par de l'encre de la même couleur, dans laquelle
les têtes d'impression des moyens d'impression effectuent une impression contrôlée, par une unité centrale de traitement et de commande de la machine, en continu sur le verre lorsque ledit pont se déplace (« X ») sur le verre statique fixé par les moyens de fixation du verre pendant l'impression, dans laquelle
la machine à imprimer est configurée pour imprimer en continu sur la feuille de verre (1) pendant le mouvement linéaire et continu du pont (3), et en ce qu'elle comprend en outre:
a. des moyens d'assistance graphique (33) configurés pour détecter et capturer automatiquement les données relatives à la position (X", Y") du défaut d'impression sur la feuille de verre (1) et configurés pour envoyer ces données, et
b. une unité centrale de traitement des données et de contrôle comprenant
i. un module configuré pour recevoir et stocker les données de position du motif (X', Y') et de ses couleurs (C'(X', Y')) à imprimer sur la feuille de verre (1)
ii. un module configuré pour recevoir et stocker les données de position des défauts d'impression (X", Y") et leurs couleurs correspondantes (C"(X", Y")) sur la feuille de verre (1),
iii. un module configuré pour envoyer des signaux d'impression aux têtes (10, 10', 10") des moyens d'impression (33) en fonction des données de position (X', Y') du motif, des données de défaut (X", Y") et des données de couleur (C'(X', Y'), C(X", Y")) à imprimer sur la feuille de verre (1), et
iv. Un logiciel configuré pour traiter les données desdits modules,
il comprend en outre des moyens de vision artificielle configurés pour capturer automatiquement les données du périmètre extérieur (X, f(X)) de la feuille de verre (1) et configurés pour envoyer lesdites données (X, f(X)) à l'unité centrale de traitement et de contrôle, et dans lequel ladite unité centrale de traitement et de contrôle comprend, en outre, un module configuré pour recevoir lesdites données du périmètre extérieur de la feuille de verre, lesdits moyens de vision artificielle étant utilisés pour reconnaître le périmètre de la feuille de verre afin d'éviter toute impression en dehors des contours de la feuille de verre.

2. Machine d'impression numérique selon la revendication 1, dans laquelle le moyen d'impression numérique (33) couvre toute la largeur du verre.

3. Machine d'impression numérique selon l'une quelconque des revendications précédentes, dans laquelle lesdits moyens d'impression numérique (33) comprennent en outre des dispositifs d'émission de rayonnement pour le séchage de l'encre.

4. Machine d'impression numérique selon la revendication 3, dans laquelle lesdits dispositifs d'émission de rayonnement de séchage sont à technologie laser ou à lampes infrarouges.

5. Machine d'impression numérique selon l'une quelconque des revendications précédentes, dans laquelle lesdites têtes d'impression (10, 10') sont du type de la technologie DROP-ON-DEMAND.

6. Machine d'impression numérique selon les revendications 3 et 5, dans laquelle ledit module configuré pour envoyer des signaux d'impression est également configuré pour envoyer des signaux d'activation desdits dispositifs d'émission de rayonnement pour le séchage de l'encre.
